# EUROPÄISCHE PATENTSCHRIFT

(11) **EP 0 992 602 B1**
(45) Veröffentlichungstag und Bekanntmachung des Hinweises auf die Patenterteilung: **16.11.2005**
(21) Anmeldenummer: 99116307.2
(22) Anmeldetag: 19.08.1999
(51) Int. Cl.: C23C 2/28, G01N 21/89

(54) **Vorrichtung zur Qualitätsüberwachung und -regelung des Galvannealed-Überzuges von Stahlbändern**
Device for quality control and regulation of the galvannealed-coating of steel sheets
Dispositif pour le contrôle de qualité et règlage du revêtement par immersion de tôles d'acier recuites

(30) Priorität: 24.08.1998 DE 19838332
(43) Veröffentlichungstag der Anmeldung: 12.04.2000
(73) Patentinhaber: SMS Demag AG, 40237 Düsseldorf (DE)
(72) Erfinder: Brisberger, Rolf, 47661 Issum (DE)
(74) Vertreter: Valentin, Ekkehard

(56) Entgegenhaltungen:
- EP-A- 0 531 963
- FR-A- 2 563 537
- LU-A- 88 285
- PATENT ABSTRACTS OF JAPAN vol. 017, no. 382 (C-1085), 19. Juli 1993 (1993-07-19) & JP 05 065614 A (NIPPON STEEL CORP), 19. März 1993 (1993-03-19)
- PATENT ABSTRACTS OF JAPAN vol. 1997, no. 10, 31. Oktober 1997 (1997-10-31) & JP 09 145638 A (KAWASAKI STEEL CORP), 6. Juni 1997 (1997-06-06)
- PATENT ABSTRACTS OF JAPAN vol. 1997, no. 09, 30. September 1997 (1997-09-30) & JP 09 113465 A (NIPPON STEEL CORP), 2. Mai 1997 (1997-05-02)
- JORDAN C E ET AL: "MORPHOLOGY DEVELOPMENT IN HOT-DIP GALVANNEAL COATINGS" METALLURGICAL AND MATERIALS TRANSACTIONS A: PHYSICAL METALLURGY &MATERIALS SCIENCE,US,THE MINERALS, METALS AND MATERIALS SOCIETY, Bd. 25A, Nr. 5, Seite 937-947 XP000442625 ISSN: 1073-5623
- PATENT ABSTRACTS OF JAPAN vol. 017, no. 445 (P-1593), 16. August 1993 (1993-08-16) & JP 05 099847 A (NIPPON STEEL CORP), 23. April 1993 (1993-04-23)

## Beschreibung

Die Erfindung betrifft eine Vorrichtung zur Qualitätsüberwachung und -regelung des Galvannealed-Überzuges von Stahlbändern unmittelbar nach dem Galvannealing, wobei der durch Schmelztauchen hergestellte feuerverzinkte Überzug der Stahlbänder durch eine thermische Behandlung in einem Glühofen bei Temperaturen oberhalb des Schmelzpunktes von Zink durch Diffusionsreaktionen in FeZn-Phasen überführt wird.

Um den Korrosionsschutz, den Verschleißschutz, die Oberflächenhärte oder das Gleitverhalten von Metallen zu verbessern, aber auch aus Gründen des besseren Aussehens ist es bekannt, die Metalle mit einem Überzug eines anderen Metalls, beispielsweise Eisen mit einem Überzug aus Zink oder Chrom zu versehen.

Zur Aufbringung dieses Überzuges haben sich verschiedene bekannte Verfahren bewährt. Es sind dies die
- Galvanischen Überzüge, wobei in geeignete Bäder aus Säuren oder wässerigen Lösungen durch Elektrolyse der metallische Überzug auf das in die Bäder eingetauchte Metall aufgebracht wird. Die erreichte Überzugsschichtdicke beträgt bei diesen Verfahren bis zu ca. 10µm.
- Schmetztauchüberzüge, die durch Eintauchen des zu überziehenden Metalls in schmelzflüssige Metallbäder erzeugt werden. Hierbei wird durch Reaktionen zwischen den Metallatomen des flüssigen überzugsmetalls und den Atomen des Grundmetalls eine dünne Legierungsschicht gebildet, über die dann eine Schicht aus reinem überzugsmetall gelegt ist. Die mit diesem Verfahren erzielbaren überzugsschichtdicken liegen deutlich höher als beim Galvanisieren und betragen beispielsweise beim Verzinken von Eisen (Feuerverzinken) 4 - 50 µm. Eine Verbesserung der Schmelztauchüberzüge lässt sich durch das
- Galvannealing erzielen (Kunstwort aus galvanising und annealing (Glühen)).

Beim Galvannealing wird das aus dem Schmelzbad austretende, nun feuerverzinkte Stahlband durch Glühen bei Temperaturen oberhalb des Schmelzpunktes von Zink thermisch nachbehandelt. Während dieser Glühung finden Diffusionsvorgänge statt, die auch die obere aus reinem überzugsmetall (Zink) bestehende Schicht durchdringen, so dass auch hier unterschiedliche FeZn-Phasen gebildet werden.

Bei einem optimal durchgeführten Galvannealing enthält der überzug schließlich ca. 10 bis 12 % Fe. Höhere Fe-Gehalte (> 12 % Fe) führen zu einem ungünstigen Umformverhalten des Stahlbandes, wobei bei einer späteren Umformung erhöht "Powdering" entsteht.

Bei niedrigeren Fe-Gehalten (< 9 % Fe) ist der überzug noch nicht vollständig durchlegiert und Restzink verbleibt an der Oberfläche des überzuges. Dieses führt zu einem unerwünscht ungleichmäßigen Aussehen mit inhomogenen Produkteigenschaften.

Um einen optimal durchreagierten Galvannealed-überzug zu erhalten, muss die thermische Behandlung hinsichtlich ihrer Einwirkdauer und hinsichtlich der Temperaturhöhe auf an die Schichtdicke angepasste Werte geregelt werden. Mögliche Regelgrößen sind für die Einwirkdauer die Länge der Glühzone des Glühofens und die Bandgeschwindigkeit des Stahlbandes und für die Temperaturhöhe die Temperatur des Glühofens.

Großtechnisch wird derzeitig eine überwachung und Regelung der Qualität des Galvannealed-überzuges in der Weise durchgeführt, dass als Parameter für die Qualität des überzuges die Temperatur des Stahlbandes oberhalb des Galvannealed-Ofens verwendet wird. Problematisch für diese Messung, die berührungslos mittels Pyrometer erfolgt, ist aber ein Wechsel im Emissionsverhalten der Bandoberfläche im Augenblick des Durchlegierens des überzuges und weiterhin auch mit fortschreitender Legierungsbildung im Galvannealed-Zustand. Es besteht die Gefahr, dass ein angezeigter Temperaturunterschied nicht auf einem tatsächlichen Unterschied beruht, sondern durch eine geänderte Emission verursacht wird. Damit ist eine funktionierende Regelung, die auf dieser gemessenen Temperatur beruht, nicht zufriedenstellend durchführbar.

Ein weiterer Nachteil der Temperaturmessung ist, dass die ideale Temperatur zum Erreichen des gewünschten Galvannealed-Zustandes vom Reaktionsverhalten des Stahls, vom Auflagegewicht, vom Aluminium-Gehalt im Zinkbad und von den Temperaturen beim Verzinken abhängig ist. Die genannte Galvanealed-Temperatur stellt nur ein indirektes Maß dar und muss noch relativ zu dem eingesetzten Material und den Verzinkungsbedingungen betrachtet werden. Die Angabe einer optimalen Galvanealed-Temperatur kann sich immer nur auf ein bestimmtes Material und eine bestimmte Kombination der einflussnehmenden Verzinkungsparameter beziehen.

Aus der EP-A-0 531 963 ist ein Verfahren bekannt, bei dem unmittelbar nach der thermischen Behandlung von Stahlbändern in einem Legierungsofen, der eine Heizzone, eine Haltezone und eine Kühlzone aufweist, zur Qualitätsüberwachung des Galvanealed-Überzuges die Temperatur des Stahlbandes und die Emissionsstärke oder die Reflexionsstärke des galvanisierten Bandstahls bestimmt wird. Zur Messung der Reflexionsstärke wird dabei entweder die Reflexion eines Laserstrahles oder die von sichtbarem Licht verwendet.

Eine weitere Möglichkeit, die Qualität des Galvanealed-Überzuges zwecks Regelung messtechnisch zu erfassen, ist die Kombination aus Temperaturmessung und der Fe-Messung an der Kaltmessstelle. Von Nachteil ist die Position der Messstelle, die bis zu 100 m hinter dem Galvanealed-Ofen liegen kann und eine nicht zufriedenstellende Genauigkeit des Eisenmessgerätes. Weiterhin können Unterschiede im Legierungszustand über die Bandbreite nicht erkannt werden.

Es ist Aufgabe der Erfindung, eine Vorrichtung zu schaffen, mit der die Qualität des Galvanealed- Überzuges realistisch messtechnisch so nah am Glühofen wie möglich erfasst werden kann, so dass eine Überwachung und eine sichere Regelung der Überzugsqualität ermöglicht wird.

Die gestellte Aufgabe wird mit den kennzeichnenden Merkmalen des Anspruchs 1 gelöst, wobei als Messgröße für die Qualität des Galvanealed-Überzuges ausschließlich das visuelle Erscheinungsbild des Galvanealed-Überzuges direkt hinter dem Glühofen erfasst und messtechnisch mit einem vorgegebenen Standard verglichen werden und auftretende Unterschiede zur Regelung des Glühofens verwendet werden sowie die Qualitätsüberwachung oberhalb und unterhalb des Stahlbandes über dessen gesamte Bandbreite durchgeführt wird.

Restzink ist aufgrund seines metallischen Glanzes mit unbewaffnetem Auge deutlich sichtbar. Der Galvannealed-überzug hat ein hellgraues mattes Aussehen. Mit zunehmenden Grad des Durchlegierens hin zu höheren Fe-Gehalten findet eine Verfärbung hin zum Dunkelgrau statt. Mit der entsprechenden Erfahrung oder einem entsprechenden Standort kann der Zustand des Galvannealed-überzuges rein visuell vorhergesagt und beurteilt werden.

Durch die Maßnahme der Erfindung wird dieses visuelle Erscheinungsbild als Qualitätsmessgröße erfasst und messtechnisch so ausgewertet, dass eine direkte Regelung des Glühofens möglich ist. Hierzu wird das visuelle Erscheinungsbild des Galvannealed-überzuges mit Hilfe eines geeigneten visuellen Aufnahmegerätes erfasst und mit einem vorgegebenen Standard verglichen. Mit Hilfe einer geeigneten Software werden dann auftretende Unterschiede in Messsignale umgewandelt, die dann zur direkten, kontinuierlichen Regelung des Glühofens verwendet werden können.

Als visuelle Aufnahmegeräte können beispielsweise lichtoptische Geräte, wie beispielsweise eine Videokamera zum Einsatz gelangen. Aber auch andere bekannte Aufnahmegeräte können hier mit einer entsprechenden Software und einem geeigneten Standard verwendet werden, wenn sie die die Qualität des Galvannealed-überzuges anzeigenden speziellen Oberflächenveränderungen (metallischer Glanz des Restzinks oder Grautöne) der Oberfläche entsprechend empfindlich aufnehmen können.

Die Erfassung des visuellen Erscheinungsbildes mit Hilfe eines Aufnahmegerätes erfolgt entsprechend der Erfindung unmittelbar nach der thermischen Behandlung, d. h. unmittelbar hinter dem Glühofen. Der Vorteil hierbei ist die schnellere Eingriffszeit in die Regelung des Glühofens.

Um die Qualität des Galvannealed-überzuges in optimaler Weise zu überwachen, findet die Erfassung des visuellen Erscheinungsbildes des überzuges über die gesamte Stahlbandbreite statt, so dass während des Stahlbandtransportes eine Oberflächenüberwachung über die gesamte Stahlbandoberfläche möglich ist.

Da beim Glühen oder bei der Abkühlung des Stahlbandes sich Unterschiede in den Galvannealed-überzugsqualität zwischen der oberen und der unteren Fläche ergeben können, kann nach einer vorteilhaften Ausgestaltung der Erfindung die Erfassung des visuellen Erscheinungsbildes oberhalb und/oder unterhalb des Stahlbandes durchgeführt werden.

Eine Vorrichtung, mit der eine Qualitätsüberwachung sowie eine Qualitätsregelung durch direkte Regelung des Glühofens möglich ist, ist gekennzeichnet durch mindestens ein visuelles Aufnahmegerät, das unmittelbar hinter dem Glühofen angeordnet ist. Das visuelle Aufnahmegerät ist über Messsignal-Leitungen mit einer Mess- und Auswertevorrichtung verbunden, in der die Messsignale des aufgenommenen Erscheinungsbildes mit einem Standard verglichen und dann mit Hilfe einer geeigneten Software auftretende Unterschiede in Messwerte umgewandelt werden. Diese Messwerte fließen über Messwert-Leitungen in eine Regelvorrichtung des Glühofens ein, in dem dann mit Hilfe dieser Messwerte durch Umwandlung in Regelstellgrößen beispielsweise die Temperatur des Glühofens oder die Länge der Glühstrecke entsprechend geregelt wird.

Um die gesamte Stahlbandbreite zu erfassen, sind mehrere visuelle Aufnahmegeräte nach einer Ausgestaltung der Erfindung unterhalb und/oder oberhalb des Stahlbandes gleichmäßig über die gesamte Stahlbandbreite verteilt, oder aber es ist mindestens ein visuelles Aufnahmegerät unterhalb und/oder oberhalb des Stahlbandes schwenkbeweglich angeordnet.

In der Zeichnungsfigur ist schematisch eine Galvannealed-Anlage (10) dargestellt. In diesem Vergleichsbeispiel wird zunächst das Stahlband (16) durch das Zinkband (11) hindurchgeführt, das mit schmetzflüssigem Zink gefüllt ist. Hierbei scheidet sich auf der Stahlbandoberfläche durch Diffusionsreaktionen eine Schicht aus FeZn-Legierungsphasen ab, die außen mit einer reinen Zn-Schicht umhüllt ist. Dieses so in seiner Oberflächenbeschaffenheit veränderte Stahlband (16') wird nun in eine Kombination aus einem induktiv beheizten Glühofen (12) und einem elektrisch/gasbeheizten Halteofen (13) eingeführt. In diesen Öfen reagiert bei einer Temperatur, die oberhalb des Schmelzpunktes des Zinks liegt, die auf dem Stahlband (16') aufgebrachte Schicht aus FeZn-Phasen und metallischem Zink weiter aus, wobei durch Diffusionsreaktionen eine Teilmenge des metallischen Zinks gleichfalls in FeZn-Phasen überführt wird.

Anschließend an den Halteofen (13) erfolgt eine Kühlung des Stahlbandes (16') in einer Kühlvorrichtung (14), aus der dann das Stahlband (16'') mit vollständig ausreagiertem Galvannealed-überzug austritt. An dieser Stelle unmittelbar nach den Kühlvorrichtungen (14) sind visuelle Aufnahmegeräte (15) angeordnet, die unterhalb und oberhalb des Stahlbandes (16'') das visuelle Erscheinungsbild des Galvannealed-überzuges aufnehmen. Die erhaltenen Messsignale werden über eine Messsignal-Leitung (19) zu einer Mess- und Auswertevorrichtung (17) übermittelt, in der sie mit Hilfe eines Standards und einer geeigneten Software in Messwerte umgewandelt werden, die über eine weitere Leitung, die sogenannte Messwert-Leitung (20) in eine Regelvorrichtung (18) für den induktiv beheizten Glühofen (12) einfließen und dort in Regelstellgrößen umgewandelt werden, über die Regel-Leitung (21) werden dann aus der Regelvorrichtung (18) die für eine optimale direkte und kontinuierliche Regelung des Ofens (12) erforderlichen Regelstellgrößen in den Ofen (12) eingespeist.

Im dargestellten Vergleichsbeispiel, in dem die thermische Behandlung durch Glühen in einer Kombination aus zwei öfen, einem induktiv beheizten Glühofen (12) und einem nachgeschalteten Halteofen (13) durchgeführt wird, ist es auch möglich, nur den Halteofen (13) zu regeln, um die gewünschten Reaktionen im Galvannealed-überzug durchzuführen oder auch beide öfen (12, 13), wenn dies erforderlich sein sollte. Die Erfinder haben dagegen verwircklicht, dass es mit einer geeigneten Software möglich, das visuelle Erscheinungsbild an unterschiedlichen Stellen aufzunehmen, direkt nach der Glühung und Z.B. zusätzlich nach der Kühlung, um auf diese Weise auch den Fortschritt der angestrebten Reaktionen zu erfassen und eine noch optimalere Qualität des Galvannealings zu erreichen.

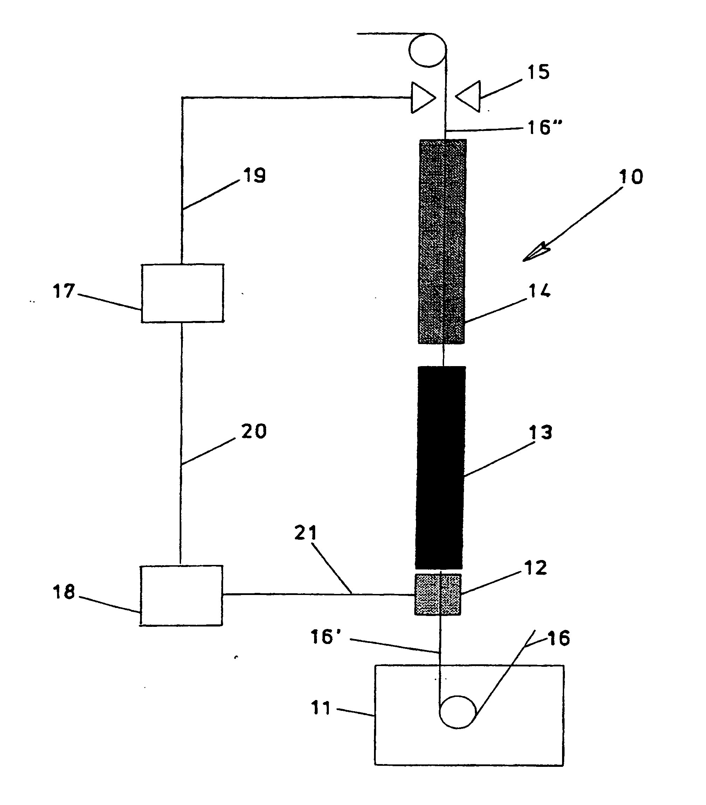

## Patentansprüche

1. Vorrichtung zur Qualitätsüberwachung und -regelung des Galvannealed-Überzuges von Stahlbändern (16") unmittelbar nach dem Galvannealing in einem Glühofen (12) mit einer nachgeschalteten Kühlvorrichtung (14),
**dadurch gekennzeichnet,**
**dass** mindestens je ein visuelles Aufnahmegerät (15) oberhalb und unterhalb des Stahlbandes unmittelbar hinter dem Glühofen (12) angeordnet ist, welches die Oberfläche des Galvannealed-Überzuges des Stahlbandes (16") visuell kontinuierlich messtechnisch erfasst und welches über eine Mess- und Auswertevorrichtung (17) mit einer Regelvorrichtung (18) für den Glühofen (12) verbunden ist.

2. Vorrichtung nach Anspruch 1,
**dadurch gekennzeichnet,**
**dass** mehrere visuelle Aufnahmegeräte (15) gleichmäßig verteilt oberhalb und unterhalb des Stahlbandes (16") angeordnet sind.

3. Vorrichtung nach Anspruch 1 oder 2,
**dadurch gekennzeichnet,**
**dass** mindestens ein visuelles Aufnahmegerät (15) oberhalb und / oder unterhalb des Stahlbandes (16") schwenkbeweglich angeordnet ist.

4. Vorrichtung nach einem oder mehreren der Ansprüche 1 bis 3,
**dadurch gekennzeichnet,**
**dass** zur Erfassung des visuellen Erscheinungsbildes ein lichtoptisches Aufnahmegerät (15), beispielsweise eine Video-Kamera verwendet wird.

## Claims

1. Device for quality monitoring and regulating of the galvannealed coating of steel strips (16") directly after galvannealing in an annealing furnace (12) with a downstream cooling device (14), **characterised in that** arranged directly after the annealing furnace (12) above and below the steel strip is at least one respective visual recording instrument (15) which continuously visually detects the surface of the galvannealed coating of the steel strip (16") by measuring and which is connected by way of a measuring and evaluating device (17) with a regulating device (18) for the annealing furnace (12).

2. Device according to claim 1, **characterised in that** several visual recording instruments (15) are arranged in uniform distribution above and below the steel strip (16").

3. Device according to claim 1 or 2, **characterised in that** at least one visual recording instrument (15) is arranged above and/or below the steel strip (16") to be pivotable.

4. Device according to one or more of claims 1 to 3, **characterised in that** a light-optical recording instrument (15), for example a video camera, is used for detection of the visual appearance.

## Revendications

1. Dispositif pour le contrôle et le réglage de la qualité du revêtement de recuit après galvanisation de feuillards d'acier (16") directement après le recuit par galvanisation dans un four de recuit (12) avec un dispositif de refroidissement (14) monté en aval,
**caractérisé en ce que**
au moins un appareil d'enregistrement (15) visuel respectif est agencé au-dessus et au-dessous du feuillard d'acier directement derrière le four de recuit (12), lequel détecte visuellement en continu par métrologie la surface du revêtement de recuit par galvanisation du feuillard d'acier (16") et qui est relié via un dispositif de mesure et d'évaluation (17) à un dispositif de régulation (18) pour le four de recuit (12).

2. Dispositif selon la revendication 1, **caractérisé en ce que** plusieurs appareils d'enregistrement (15) visuel sont agencés en étant répartis de façon régulière au-dessus et au-dessous du feuillard d'acier (16").

3. Dispositif selon l'une ou l'autre des revendications 1 et 2, **caractérisé en ce qu'**au moins un appareil d'enregistrement (15) visuel est agencé de manière à pouvoir pivoter au-dessus et/ou au-dessous du feuillard d'acier (16").

4. Dispositif selon l'une ou plusieurs des revendications 1 à 3, **caractérisé en ce que** pour détecter l'aspect visuel, on utilise un appareil d'enregistrement (15) optique, par exemple une caméra vidéo.
